# EUROPÄISCHE PATENTSCHRIFT

(11) **EP 1 039 267 B1**
(45) Veröffentlichungstag und Bekanntmachung des Hinweises auf die Patenterteilung: **21.11.2007**
(21) Anmeldenummer: 00105026.9
(22) Anmeldetag: 09.03.2000
(51) Int. Cl.: G01D 5/347

(54) **Positionsmesseinrichtung**
Position measuring device
Dispositif de mesure de positions

(30) Priorität: 19.03.1999 DE 19912310
(43) Veröffentlichungstag der Anmeldung: 27.09.2000
(73) Patentinhaber: Dr. Johannes Heidenhain GmbH, 83292 Traunreut (DE)
(72) Erfinder: Böge, Ludwig, 07751 Jenapriessnitz (DE); Freitag, Hans-Joachim, Dr., 07749 Jena (DE)

(56) Entgegenhaltungen:
- EP-A- 0 385 418
- EP-A- 0 416 391
- DE-A- 3 503 116
- DE-C- 19 611 983

## Beschreibung

Die Erfindung betrifft eine Positionsmeßeinrichtung mit einem Teilungsträger, der an einem Halter befestigt ist.

Derartige Positionsmeßeinrichtungen werden insbesondere an Werkzeugmaschinen zur Messung der Relativposition eines Werkzeuges gegenüber einem Werkstück eingesetzt. Dabei ist der Teilungsträger entweder direkt auf einem zu messenden Objekt (Maschinenteil) aufgeklebt oder über einen Halter - beispielsweise einem Halter, welcher gleichzeitig ein Gehäuse bildet - an diesem Objekt befestigt. Es hat sich gezeigt, daß die Meßgenauigkeit einer Positionsmeßeinrichtung wesentlich von der Befestigung des Teilungsträgers am zu messenden Objekt abhängt.

Zur Optimierung dieser Befestigung wird gemäß der DE 196 11 983 C1 ein viskoser Flüssigkeitsfilm zwischen dem Teilungsträger und dem Halter eingesetzt. Die Kopplung zwischen dem Teilungsträger und dem Halter wird durch die Kapillarwirkung der viskosen Zwischenschicht erzeugt, wodurch der Teilungsträger bezüglich auftretender mechanischer Spannungen vom Halter weitgehend entkoppelt ist.

Nachteilig bei dieser Anordnung ist, daß die Teilung des Teilungsträgers völlig frei liegt.

Zur Lösung dieses Problems wird in der EP 0 416 391 B1 eine Positionsmeßeinrichtung angegeben, bei der der Teilungsträger aus Glas besteht und mit seiner die Teilung tragenden Seite über einen viskosen Flüssigkeitsfilm am Halter befestigt ist. Die Teilung wird durch den transparenten Glasträger hindurch abgetastet.

Die Teilung selbst ist bei dieser Anordnung sehr gut vor Umwelteinflüssen geschützt untergebracht. Nachteilig ist aber auch hier, daß der Teilungsträger selbst allen Umwelteinflüssen ausgesetzt ist. Durch den relativ großen Abstand der Teilung von der neutralen Faser des Teilungsträgers wird die teilungstragende Oberfläche unter dem Einfluß von äußeren mechanischen Kräften und einer unebenen Unterlage stark gedehnt oder gestaucht. Der daraus resultierende Maßstabfehler ist relativ hoch.

In der EP 0 385 418 A2 ist eine Positionsmesseinrichtung angegeben, bei der ein eine Messteilung tragendes Substrat an einer Abdeckung durch Kleben befestigt ist. Die Abtastung der Messteilung erfolgt durch die Abdeckung hindurch. Die Befestigung des die Messteilung tragenden Substrats erfolgt über die Abdeckung, indem diese an einem Absatz eines Trägers festgeklemmt ist. Das Substrat und die Abdeckung haben etwa gleiche Materialstärken und auch hier ist das Substrat als Teilungsträger den Umwelteinflüssen ausgesetzt.

Der Erfindung liegt die Aufgabe zugrunde, eine Positionsmeßeinrichtung anzugeben, bei der der Teilungsträger bezüglich mechanischer Spannungen von seinem Halter weitgehend entkoppelt ist und der Teilungsträger auch gegenüber äußeren mechanischen Einwirkungen auf einfache Weise geschützt ist.

Diese Aufgabe wird erfindungsgemäß durch die Merkmale des Anspruches 1 gelöst.

Die mit der Erfindung erzielten Vorteile bestehen insbesondere darin, daß mit einfachen Mitteln ein wirksamer Schutz der Teilung vor Verunreinigungen und vor äußeren mechanischen Einwirkungen erzielt wird, so daß diese Positionsmeßeinrichtung für hochgenaue Messungen eingesetzt werden kann.

Weitere Vorteile, die sich aufgrund vorteilhafter Ausbildungen der Erfindung ergeben, sind in der nachfolgenden Beschreibung aufgeführt.

In den abhängigen Ansprüchen sind vorteilhafte Ausbildungen der Erfindung angegeben.

Ausführungsbeispiele der Erfindung werden anhand der Zeichnungen näher erläutert.

Es zeigt
- Figur 1: einen Querschnitt I-I einer ersten Längenmeßeinrichtung,
- Figur 2: einen Längsschnitt II-II der Längenmeßeinrichtung gemäß Figur 1,
- Figur 3: die erste Längenmeßeinrichtung in eine Führung integriert,
- Figur 4: einen Querschnitt einer zweiten Längenmeßeinrichtung,
- Figur 5: einen Querschnitt einer dritten Längenmeßeinrichtung,
- Figur 6: einen Querschnitt einer vierten Längenmeßeinrichtung,
- Figur 7: einen Querschnitt einer fünften Längenmeßeinrichtung und
- Figur 8: einen Querschnitt einer weiteren Längenmeßeinrichtung mit einer Führung der Abtasteinheit.

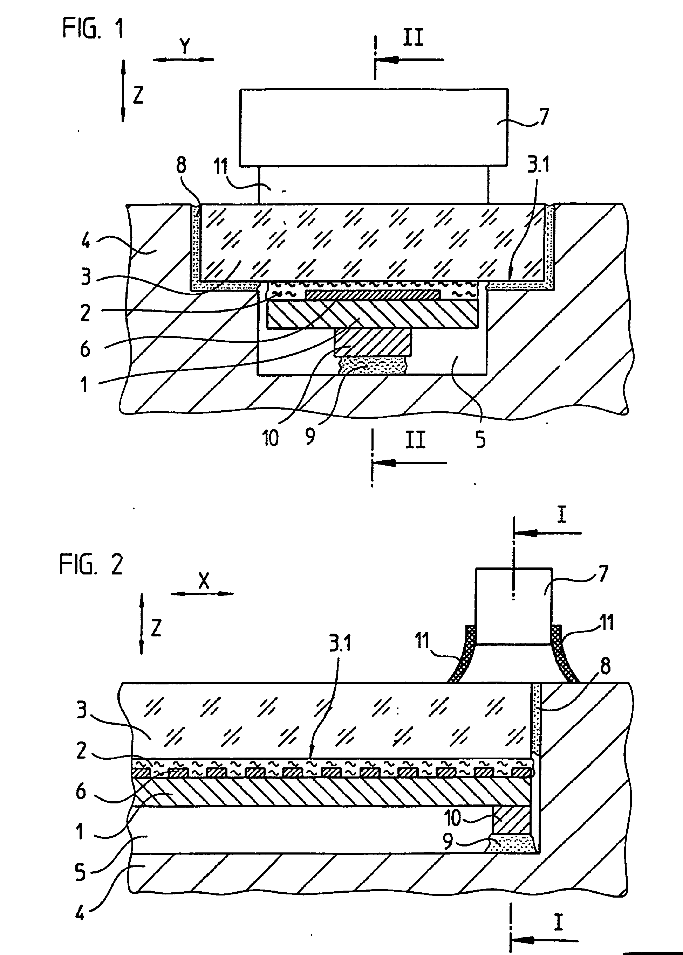

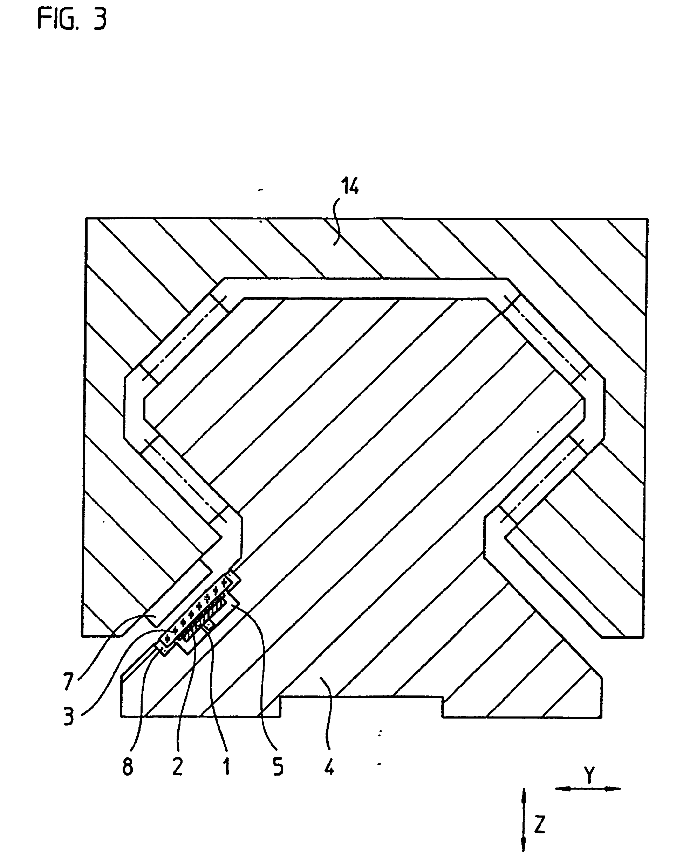

In den Figuren 1 und 2 ist ein erstes Ausführungsbeispiel der Erfindung dargestellt. Diese Positionsmeßeinrichtung in Form einer Längenmeßeinrichtung besteht aus einem Teilungsträger 1, der über einen viskosen Flüssigkeitsfilm 2 an einem Halter 3 durch Adhäsionskräfte haftet. Der Halter 3 ist wiederum an einer Fassung 4 befestigt. Zur geschützten Aufnahme des Teilungsträgers 1 ist in der Fassung 4 eine Nut 5 eingebracht. Diese Nut 5 wird durch den Halter 3 hermetisch abgedeckt.

Der Teilungsträger 1 ist ein dünner biegbarer Streifen (z.B. 0,2 mm dick und 8 mm breit), der aus einem polierten handelsüblichen Edelstahlband besteht. Auf der Oberfläche 3.1 des Teilungsträgers 1, welche dem Halter 3 direkt gegenüberliegt, ist eine reflektierende Meßteilung 6 in Form einer inkrementalen Teilung und/oder einer absoluten Codierung aufgebracht. Diese Meßteilung 6 wird in an sich bekannter Weise lichtelektrisch durch den transparenten Halter 3 hindurch von einer Abtasteinheit 7 abgetastet. Die Abtasteinheit 7 liefert somit bei einer Relativbewegung gegenüber der Meßteilung 6 in Meßrichtung X positionsabhängige elektrische Abtastsignale.

Der viskose Flüssigkeitsfilm 2 ist vorzugsweise ein transparentes Silikonöl mit einer kinematischen Viskosität von etwa 10.000 mm²/s. Der Teilungsträger 1 wird allein aufgrund der Viskosität des Flüssigkeitsfilmes 2 an der Unterseite 3.1 des Halters 3 haftend gehalten. Der Flüssigkeitsfilm 2 garantiert eine spannungsentkoppelte Befestigung des Teilungsträgers 1. Er erlaubt eine freie Längenänderung des Teilungsträgers 1 relativ zum Halter 3 bei Temperaturänderungen, ohne daß unzulässige Spannungen (Stauchung, Dehnung) im Teilungsträger 1 auftreten bzw. auf ihn vom Teilungsträger 1 in unzulässiger Weise übertragen werden. Diese Längenänderung verursacht partiell eine Verschiebung des Teilungsträgers 1 relativ zum Halter 3 in Meßrichtung X, wobei nur geringste Haftreibung auftritt. Wegen der geringen Dicke des Teilungsträgers 1 sind Biege-Einflüsse ebenfalls vernachlässigbar klein. Der Flüssigkeitsfilm 2 ist zwischen dem Teilungsträger 1 und der Unterseite 3.1 des Halters 3 ganzflächig und in Meßrichtung X verlaufend homogen als dünne Zwischenschicht eingebracht. Die Viskosität des Flüssigkeitsfilmes 2 bewirkt, daß sich der dünne und biegsame Teilungsträger 1 geringen Eigengewichts über die Adhäsionskräfte an die Unterseite 3.1 des Halters 3 anschmiegt und diese Oberfläche 3.1 als Referenzfläche bezüglich der Ebenheit bzw. Geradheit des Teilungsträgers 1 dient. Der Teilungsträger 1 schwimmt sozusagen am Halter 3, ohne sich von ihm abzuheben. Die Verwendung von Glas als Material für den Halter 3 hat dabei den Vorteil, daß es über große Längen preisgünstig mit hoher Oberflächenqualität und Geradheit zur Verfügung steht. Die Abmessungen und das Material des Halters 3 sind vorteilhafterweise so zu wählen, daß er hohe Eigenstabilität und somit konstante Ebenheit und Geradheit entlang der Meßteilung X besitzt.

Die Kapillarwirkung verhindert ein Herausfließen der Flüssigkeit 2 aus dem Spalt und zieht den Teilungsträger 1 gegen die Unterseite 3.1.

Die Befestigung des Halters 3 an der Fassung 4 ist abhängig von den thermischen Ausdehnungskoeffizienten von Halter 3 und Fassung 4 zu wählen. Bei gleichen Ausdehnungskoeffizienten könnte der Halter 3 über seine gesamte Länge starr an der Fassung 4 befestigt werden. In der Praxis treten aber auch bei gleichen Ausdehnungskoeffizienten aufgrund von Temperaturgradienten unterschiedliche Ausdehnungen auf. Deshalb ist es vorteilhaft, die Befestigung so auszugestalten, daß auch der Halter 3 von der Fassung 4 - in Meßrichtung X betrachtet - entkoppelt ist. Erreicht wird dies, indem der Halter 3 über einen dauerelastischen Klebstoff 8 insbesondere eine Silikonkautschuk-Klebeschicht an der Fassung 4 befestigt ist. Der Klebstoff 8 zwischen der Fassung 4 und dem Halter 3 garantiert eine freie Längenausdehnung der Fassung 4 sowie des Halters 3, ohne daß unzulässige Spannungen im Halter 3 auftreten bzw. auf ihn übertragen werden.

Zur Realisierung eines Fixpunktes 9 des Meßsystems ist der Teilungsträger 1 an einer Stelle, d. h., an einem einzigen Ort entlang des Teilungsträgers 1 direkt mit der Fassung 4 starr gekoppelt. Diese Kopplung ist in den Figuren nur schematisch als örtlich starre Klebeverbindung 9 eingezeichnet, sie kann auch durch eine Schweiß- oder Schraubverbindung realisiert sein. Im dargestellten Beispiel ist die Nut 5 so tief, daß eine Klebeverbindung 9 zwischen dem Teilungsträger 1 und der Fassung 4 relativ dick und somit instabil sein würde. Aus diesem Grund ist zum Niveauausgleich auf der Unterseite des Teilungsträgers 1 eine Abstandsplatte 10 angeschweißt und die starre Klebeverbindung 9 zwischen der Abstandsplatte 10 und der Fassung 4 ausgebildet. Die starre Klebeverbindung 9 kann anstelle der Unterseite des Teilungsträgers 1 auch an einer Seitenkante oder endseitig an einer Stirnseite vorgesehen sein. Alternativ kann der Fixpunkt 9 auch über den Halter 3 realisiert sein, indem der Teilungsträger 1 an einer Stelle (in X-Richtung betrachtet) starr am Halter 3 fixiert ist und weiter der Halter 3 an dieser Stelle an der Fassung 4 starr fixiert ist. Vorzugsweise wird der Fixpunkt 9 an einem Ende des Teilungsträgers 1 ausgebildet.

Durch die beschriebene Anordnung ist der Teilungsträger 1 durch den Halter 3 geschützt angeordnet. Die freie Oberfläche des Halters 3 kann besonders einfach gesäubert werden, indem sie mittels eines an der Abtasteinheit 7 angebrachten Abstreifers 11 abgestreift wird. Die über den Abstreifer 11 eventuell eingeleiteten Kräfte werden durch die entkoppelte Befestigung nicht auf den Teilungsträger 1 übertragen.

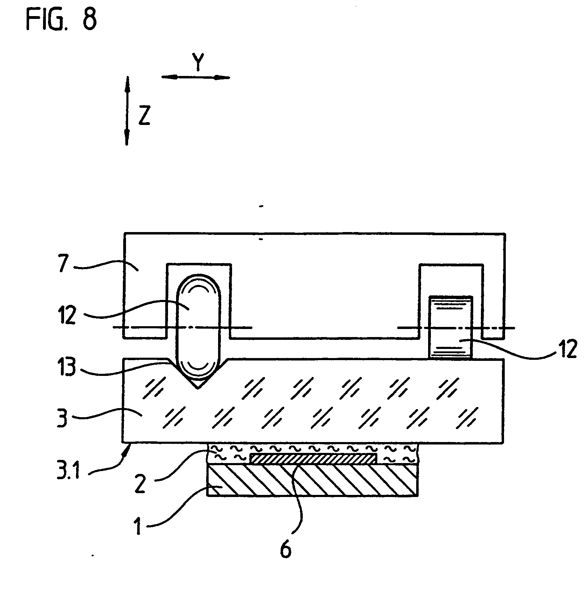

Die Abtasteinheit 7 kann an der Fassung 4 geführt sein, die Führung kann aber auch an dem Halter 3 erfolgen, indem sich die Abtasteinheit 7 am Halter 3 mittels Gleit- oder Rollelemente 12 nur abstützt oder im Halter 3 zumindest eine in Meßrichtung X verlaufende V-Nut 13 eingebracht ist, die auch eine Geradführung der Abtasteinheit 7 quer zur Meßrichtung X - also in Y-Richtung - gewährleistet. Diese Ausführung ist im Prinzip in Figur 8 schematisch dargestellt.

Eine besonders vorteilhafte Anwendung der Längenmeßeinrichtung gemäß den Figuren 1 und 2 ist die platzsparende Integration in Führungseinheiten 4, 14, die als eigenständige Baueinheit am Maschinenbett einer Werkzeugmaschine befestigbar sind. Diese Integration ist in Figur 3 schematisch dargestellt. Der Teilungsträger 1 ist in einer Nut 5 der die Fassung bildenden Führung 4 geschützt untergebracht. Die Abtasteinheit 7 ist am Führungsschlitten 14 befestigt. Die Führungseinheit 4, 14 kann eine Kugelumlaufführung, eine Rollenumlaufführung oder eine andere handelsübliche Führungseinheit 4, 14 sein.

In nicht gezeigter Weise ist auch eine Integration in einen Linearantrieb möglich.

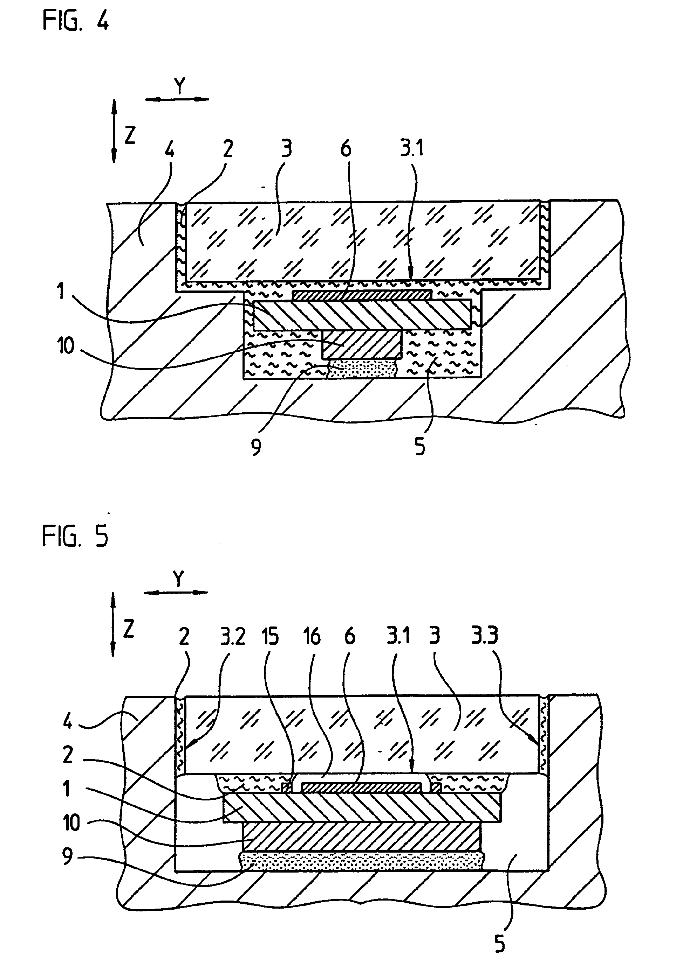

Das in Figur 4 gezeigte zweite Ausführungsbeispiel unterscheidet sich vom ersten Ausführungsbeispiel dadurch, daß anstelle des dauerelastischen Klebstoffes 8 eine viskose Flüssigkeit 2 zur Befestigung des Halters 3 an der Fassung 4 eingesetzt ist. Hierzu ist zwischen Oberflächen des Halters 3 und Oberflächen der Fassung 4 ein dünner Spalt mit Flüssigkeit 2 vorgesehen, so daß der Halter 3 aufgrund der Viskosität der Flüssigkeit 2 an der Fassung 4 in Meßrichtung X elastisch gehalten ist. Zusätzlich kann der gesamte Nutraum 5 mit der Flüssigkeit 2 aufgefüllt sein. Dabei ist aber zu beachten, daß der Spalt zwischen dem Nutboden und der Unterseite des Teilungsträgers 1 wesentlich größer ist, als der Spalt zwischen dem Teilungsträger 1 und dem Halter 3. Es muß nämlich gewährleistet sein, daß die Adhäsionskräfte zwischen dem Teilungsträger 1 und dem Halter 3 wesentlich größer sind, als zwischen dem Teilungsträger 1 und dem Nutboden der Fassung 4. Bei dieser Ausführung dient der Nutraum 5 als Flüssigkeitsdepot zur Ausbildung einer homogenen Flüssigkeitsschicht 2 zwischen dem Teilungsträger 1 und dem Halter 3, indem die benötigte Flüssigkeit 2 aufgrund der Kapillarwirkung in den Spalt eingezogen wird. Die Flüssigkeit 2 hat auch die Funktion der Abdichtung zwischen dem Halter 3 und der Fassung 4. Weiterhin ist bei dieser Ausgestaltung eine einfache Austauschbarkeit des Halters 3 mit dem Teilungsträger 1 möglich.

Bei dem dritten Ausführungsbeispiel gemäß Figur 5 ist der Halter 3 ausschließlich mit seinen senkrecht zur Oberfläche 3.1 verlaufenden Längsseiten 3.2 und 3.3 an der Fassung 4 befestigt. Dies hat den Vorteil, daß Verbiegungen der Fassung 4 in Z-Richtung nicht unmittelbar auf den Halter 3 übertragen werden. Die Ebenheit und Geradheit des eigenstabilen Halters 3 ist durch den Flüssigkeitsfilm 2 von der Fassung 4 entkoppelt. Zwischen dem Halter 3 und der Fassung 4 kann anstelle des Flüssigkeitsfilmes 2 auch ein dauerelastischer Klebstoff Verwendung finden.

Das Ausführungsbeispiel gemäß Figur 5 zeigt weiterhin, daß es nicht unbedingt erforderlich ist, den Flüssigkeitsfilm 2 über die gesamte Breite (Y-Richtung) des Teilungsträgers 1 vorzusehen. So kann bei besonderen Anforderungen beispielsweise der Abtastbereich der Meßteilung 6 von Flüssigkeit 2 partiell gezielt freigehalten werden. Hierzu können Fließkanten 15 am Teilungsträger 1 und/oder am Halter 3 vorgesehen werden, welche das Fließen der Flüssigkeit 2 in den freizuhaltenden Raum 16 verhindern.

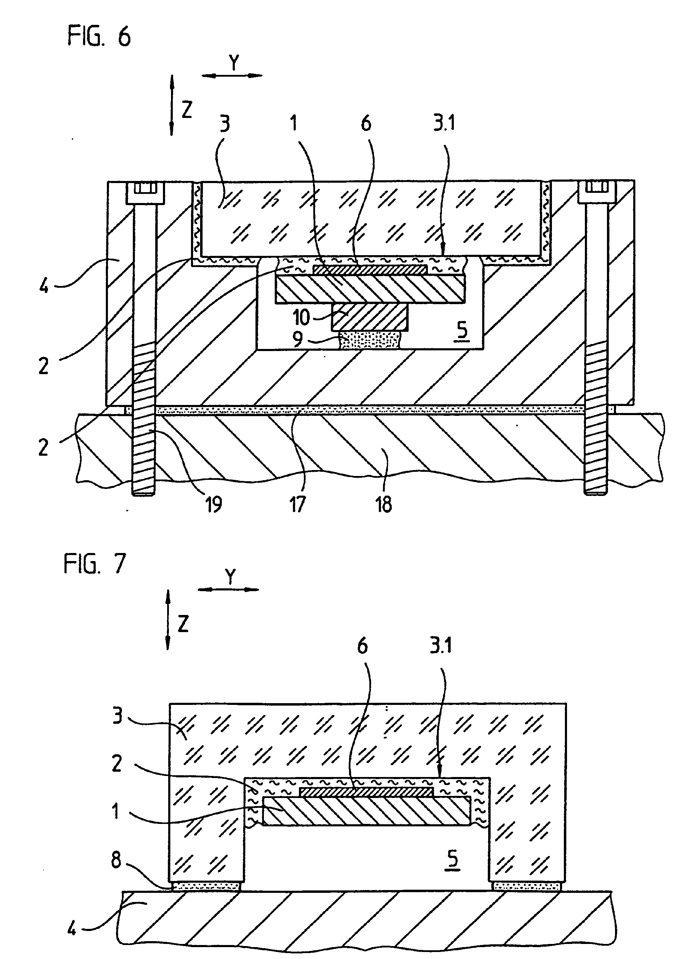

Figur 6 zeigt ein viertes Ausführungsbeispiel. Wesentlich dabei ist, daß die Fassung 4 als Teil einer einfach zu montierenden und auszutauschenden Längenmeßeinrichtung ausgebildet ist. Die Fassung 4 ist insbesondere als Schiene ausgebildet, die vom Anwender einfach durch bekannte Maßnahmen lösbar an einer Werkzeug- oder Meßmaschine 18 befestigt werden kann. Diese Befestigung kann durch Vorsehen einer Klebeschicht 17 in Form einer doppelseitig klebenden Klebefolie erfolgen. Vorteilhaft ist, wenn auch hier nur ein einziger Fixpunkt 19 (Ort in Meßrichtung X betrachtet) zwischen der Fassung 4 und der Anbaufläche 18 vorgesehen ist, der beispielsweise durch Schrauben 19 realisiert ist. Im übrigen Bereich sollte die kräfte- und spannungsfreie Ausdehnung der Fassung 4 relativ zur Anbaufläche 18 möglich sein. Meßtechnisch ist es vorteilhaft, wenn der Fixpunkt 19 und der Fixpunkt 9 an der gleichen Position in X-Richtung vorgesehen werden.

Die Fassung 4 kann auch gleichzeitig das Gehäuse für die Abtasteinheit 7 einer gekapselten Längenmeßeinrichtung bilden. Die Führung der Abtasteinheit 7 kann am Gehäuse und/oder am Halter 3 erfolgen.

Das fünfte Ausführungsbeispiel gemäß Figur 7 zeigt, daß der Halter 3 nicht nur plattenförmig ausgebildet werden kann, sondern auch gleichzeitig die Nut 5 zur Aufnahme des Teilungsträgers darin integriert sein kann. Durch diese Ausgestaltung ist der Teilungsträger 1 auch seitlich über die Flüssigkeitsschicht 2 am Halter 3 befestigt und gegen ein seitliches Verschieben oder Verdrehen gesichert.

Um ein seitliches Verschieben (in Y-Richtung) bzw. Verdrehen des Teilungsträgers 1 relativ zum Halter 3 zu verhindern, können bei allen Ausführungsbeispielen seitliche Anschläge für den Teilungsträger 1 am Halter 3 vorgesehen sein. Dieses Verschieben bzw. Verdrehen kann aber auch durch einen Steg verhindert werden, auf dem der Teilungsträger 1 über den Flüssigkeitsfilm 2 gehalten ist und dessen Breite der Breite des Teilungsträgers 1 entspricht, wie an sich in der EP 0 416 391 B1 in Figur 6 gezeigt.

Die Verwendung eines Stahlbandes als Teilungsträger 1 ist besonders vorteilhaft, aber für die Erfindung nicht unbedingt erforderlich. Es können auch andere Materialien dafür Verwendung finden, beispielsweise transparente Materialien in Form von Bändern aus Glas oder Folien aus Zerodur.

Wenn die Meßteilung 6 als optisch abtastbare Struktur in Form eines reflektierenden Phasengitters oder aus in Meßrichtung X abwechselnd angeordneten reflektierenden und nicht reflektierenden Bereichen ausgebildet ist, kann eine besonders hochauflösende Positionsmessung erreicht werden. Die Meßteilung 6 kann aber auch magnetisch, induktiv oder kapazitiv abtastbar ausgebildet sein.

## Patentansprüche

1. Positionsmeßeinrichtung mit einem Teilungsträger (1), wobei die Meßteilung (6) des Teilungsträgers (1) zur Erzeugung von positionsabhängigen Abtastsignalen von einer Abtasteinheit (7) abtastbar ist, und der Teilungsträger (1) ein dünnes biegbares Band (1) ist, das über einen viskosen Flüssigkeitsfilm (2) als Zwischenfilm auf einer Oberfläche (3.1) eines Halters (3) durch Adhäsionskräfte haftend befestigt ist, **dadurch gekennzeichnet, dass**
- die Meßteilung (6) der Oberfläche (3.1) des Halters (3) gegenüberliegend angeordnet ist;
- die Meßteilung (6) durch den Halter (3) hindurch abtastbar ist;
- der Halter (3) ein eigenstabiler Körper ist, dessen Oberfläche (3.1) als Referenzfläche bezüglich der Ebenheit des Bandes (1) dient, an die sich das Band (1) anschmiegt;
- der Halter (3) an einer Fassung (4) befestigt ist, indem im Halter (3) oder in der Fassung (4) eine Nut (5) zur Aufnahme des Bandes (1) eingebracht ist, so daß der Nutraum (5), in dem das Band (1) angeordnet ist durch die Fassung (4) sowie durch den Halter (3) abgedeckt ist.

2. Positionsmeßeinrichtung nach Anspruch 1, **dadurch gekennzeichnet, daß** die viskose Flüssigkeit (2) ein Silikonöl ist.

3. Positionsmeßeinrichtung nach einem der vorhergehenden Ansprüche, **dadurch gekennzeichnet, daß** der Teilungsträger (1) ein dünnes biegbares Stahlband ist.

4. Positionsmeßeinrichtung nach einem der vorhergehenden Ansprüche, **dadurch gekennzeichnet, daß** die Meßteilung (6) eine reflektierende und lichtelektrisch abtastbare Struktur ist.

5. Positionsmeßeinrichtung nach einem der vorhergehenden Ansprüche, **dadurch gekennzeichnet, daß** der Halter (3) ein transparenter Glaskörper ist.

6. Positionsmeßeinrichtung nach einem der vorhergehenden Ansprüche, **dadurch gekennzeichnet, daß** die viskose Flüssigkeit (2) homogen im Bereich der Meßteilung (6) zwischen dem Teilungsträger (1) und dem Halter (3) vorgesehen ist.

7. Positionsmeßeinrichtung nach einem der Ansprüche 1 bis 5, **dadurch gekennzeichnet, daß** der Zwischenfilm eine viskose Flüssigkeit (2) ist, die nur partiell zwischen dem Teilungsträger (1) und dem Halter (3) vorgesehen ist, wobei Mittel (15) vorgesehen sind, um einen Raum (16) zwischen dem Teilungsträger (1) und dem Halter (3) von der Flüssigkeit (2) frei zu halten.

8. Positionsmeßeinrichtung nach einem der vorhergehenden Ansprüche, **dadurch gekennzeichnet, daß** der Halter (3) über ein in Meßrichtung (X) elastisches Mittel (2, 8) an der Fassung (4) befestigt ist.

9. Positionsmeßeinrichtung nach Anspruch 8, **dadurch gekennzeichnet, daß** das elastische Mittel (2, 8) den Raum zwischen dem Halter (3) und der Fassung zumindest weitgehend abdichtet.

10. Positionsmeßeinrichtung nach Anspruch 9, **dadurch gekennzeichnet, daß** das elastische Mittel ein dauerelastischer Klebstoff (8) oder eine viskose Flüssigkeit (2) ist.

11. Positionsmeßeinrichtung nach Anspruch 10, **dadurch gekennzeichnet, daß** der Nutraum (5) mit einer viskosen Flüssigkeit (2) aufgefüllt ist.

12. Positionsmeßeinrichtung nach einem der vorhergehenden Ansprüche, **dadurch gekennzeichnet, daß** der Halter (3) mit seinen senkrecht zur Oberfläche (3.1) verlaufenden Längsseiten (3.2, 3.3) an parallel zu diesen Längsseiten (3.2, 3.3) verlaufenden Anschlagflächen der Fassung (4) befestigt ist.

13. Positionsmeßeinrichtung nach einem der vorhergehenden Ansprüche, **dadurch gekennzeichnet, daß** der Teilungsträger (1) an einer einzigen Position (9) starr direkt an der Fassung (4) befestigt ist.

14. Positionsmeßeinrichtung nach einem der Ansprüche 1 bis 12, **dadurch gekennzeichnet, dass** der Teilungsträger (1) an einer einzigen Position starr am Halter (3) und der Halter (3) wiederum an dieser Position starr an der Fassung befestigt ist.

15. Positionsmeßeinrichtung nach einem der vorhergehenden Ansprüche, **dadurch gekennzeichnet, daß** die Fassung (4) eine Linearführung ist.

16. Positionsmeßeinrichtung nach einem der vorhergehenden Ansprüche, **dadurch gekennzeichnet, daß** die Abtasteinheit (7) an dem Halter (3) geführt ist.

17. Positionsmeßeinrichtung nach Anspruch 16, **dadurch gekennzeichnet, daß** im Halter (3) zumindest eine in Meßrichtung (X) verlaufende V-förmige Nut (14) eingebracht ist, in die ein Führungselement (12) der Abtasteinheit (7) eingreift.

## Claims

1. Position measuring device with a graduation carrier (1), wherein the graduated scale (6) of the graduation carrier (1) can be scanned by a scanning unit (7) to generate position-dependent scanning signals, and the graduation carrier (1) is a thin bendable band (1), which by means of a viscous liquid film (2) is adhesively secured as an intermediate film to a surface (3.1) of a holder (3) by means of adhesion forces, **characterised in that**
• the graduated scale (6) is arranged to lie opposite the surface (3.1) of the holder (3);
• the graduated scale (6) can be scanned through the holder (3);
• the holder (3) is an inherently stable body, the surface (3.1) of which serves as a reference surface with respect to the flatness of the band (1), against which the band (1) snugly sits;
• the holder (3) is fastened to a socket (4) by a groove (5) being configured in the holder (3) or in the socket (4) to receive the band (1), so that the groove space (5), in which the band (1) is arranged, is covered by the socket (4) and also by the holder (3).

2. Position measuring device according to Claim 1, **characterised in that** the viscous liquid (2) is a silicon oil.

3. Position measuring device according to one of the preceding claims, **characterised in that** the graduation carrier (1) is a thin bendable steel band.

4. Position measuring device according to one of the preceding claims, **characterised in that** the graduated scale (6) is a reflecting structure that can be scanned photoelectrically.

5. Position measuring device according to one of the preceding claims, **characterised in that** the holder (3) is a transparent glass body.

6. Position measuring device according to one of the preceding claims, **characterised in that** the viscous liquid (2) is provided homogeneously in the region of the graduated scale (6) between the graduation carrier (1) and the holder (3).

7. Position measuring device according to one of Claims 1 to 5, **characterised in that** the intermediate film is a viscous liquid (2), which is only partially provided between the graduation carrier (1) and the holder (3), wherein means (15) are provided to keep a space (16) free from the liquid (2) between the graduation carrier (1) and the holder (3).

8. Position measuring device according to one of the preceding claims, **characterised in that** the holder (3) is fastened to the socket (4) by means of a means (2, 8) elastic in measurement direction (X).

9. Position measuring device according to Claim 8, **characterised in that** the elastic means (2, 8) at least substantially seals the space between the holder (3) and the socket.

10. Position measuring device according to Claim 9, **characterised in that** the elastic means is a permanently elastic adhesive (8) or a viscous liquid (2).

11. Position measuring device according to Claim 10, **characterised in that** the groove space (5) is filled with a viscous liquid (2).

12. Position measuring device according to one of the preceding claims, **characterised in that** at its longitudinal sides (3.2, 3.3) running perpendicular to the surface (3.1) the holder (3) is fastened to stop faces of the socket (4) running parallel to these longitudinal sides (3.2, 3.3).

13. Position measuring device according to one of the preceding claims, **characterised in that** the graduation carrier (1) is fastened rigidly directly on the socket (4) at a single position (9).

14. Position measuring device according to one of Claims 1 to 12, **characterised in that** the graduation carrier (1) is fastened rigidly to the holder (3) at a single position and the holder (3) in turn is fastened rigidly to the socket at this position.

15. Position measuring device according to one of the preceding claims, **characterised in that** the socket (4) is a linear guide.

16. Position measuring device according to one of the preceding claims, **characterised in that** the scanning unit (7) is guided on the holder (3).

17. Position measuring device according to Claim 16, **characterised in that** at least a V-shaped groove (14) running in measurement direction (X), into which a guide element (12) of the scanning unit (7) engages, is configured in the holder (3).

## Revendications

1. Dispositif de mesure de position comportant un support de graduation (1) dont la graduation (6) peut être explorée par une unité d'exploration (7) pour produire des signaux d'exploration en fonction de la position, le support de graduation (1) étant un ruban flexible mince (1) fixé sur un appui (3) par des forces d'adhérence produites par un film liquide (2) interposé entre une surface (3.1) de l'appui et le support (1), ce dispositif présentant les caractéristiques suivantes :
- la graduation de mesure (6) est située en face de la surface (3.1) de l'appui,
- la graduation de mesure (6) peut être explorée à travers l'appui (3),
- l'appui (3) est un corps à stabilité de forme, dont la surface (3.1) sert, en ce qui concerne la planéité du ruban (1), de surface de référence qu'épouse ce ruban,
- l'appui (3) est fixé sur une monture (4), et dans cet appui (3) ou dans la monture (4) est réalisée une rainure (5) pour accueillir le ruban (1), de sorte que le volume (5) de la rainure dans laquelle se trouve le ruban (1) est recouvert par la monture (4) ainsi que par l'appui (3).

2. Dispositif de mesure de position selon la revendication 1, **caractérisé en ce que** le liquide visqueux (2) est une huile de silicone.

3. Dispositif de mesure de position selon la revendication 1 ou 2, **caractérisé en ce que** le support de graduation (1) est un ruban d'acier mince et flexible.

4. Dispositif de mesure de position selon une des revendications précédentes, **caractérisé en ce que** la graduation de mesure (6) est une structure réfléchissante ou pouvant être explorée par la lumière électrique.

5. Dispositif de mesure de position selon une des revendications précédentes, **caractérisé en ce que** l'appui (3) est un corps transparent en verre.

6. Dispositif de mesure de position selon une des revendications précédentes, **caractérisé en ce que** le liquide visqueux (2) est prévu homogène dans la zone de la graduation de mesure (6) entre le support de graduation (1) et l'appui (3).

7. Dispositif de mesure de position selon une des revendications 1 à 5, **caractérisé en ce que** le film intermédiaire est un liquide visqueux (2) prévu seulement en partie entre le support de graduation (1) et l'appui (3), des moyens étant prévus pour maintenir libre de liquide (2) un espace (16) entre le support de graduation (1) et l'appui (3).

8. Dispositif de mesure de position selon une des revendications précédentes, **caractérisé en ce que** l'appui (3) est fixé sur la monture (4) par un moyen (2, 8) élastique selon la direction de mesure (X).

9. Dispositif de mesure de position selon la revendication 8, **caractérisé en ce que** le moyen élastique (2.3) assure au moins largement l'étanchéité entre l'appui (3) et la monture (4).

10. Dispositif de mesure de position selon la revendication 9, **caractérisé en ce que** le moyen élastique est un adhésif (8) à élasticité permanente ou un liquide (2) visqueux.

11. Dispositif de mesure de position selon la revendication 10, **caractérisé en ce que** le volume (5) de la rainure est rempli d'un liquide visqueux (2).

12. Dispositif de mesure de position selon une des revendications précédentes, **caractérisé en ce que** l'appui (3) est fixé par ses côtés longitudinaux (3.2, 3.3) perpendiculairement à la surface (3.1), à des portées de butée de la monture (4), perpendiculaires aux côtés longitudinaux (3.2, 3.3).

13. Dispositif de mesure de position selon une des revendications précédentes, **caractérisé en ce que** le support de graduation (1) est fixé rigidement et directement à la monture (4), en une seule position (9).

14. Dispositif de mesure de position selon une des revendications 1 à 12, **caractérisé en ce que** le support de graduation (1) est fixé rigidement à l'appui (3) en une seule position et l'appui (3) est lui-même dans cette position fixé rigidement la monture (4).

15. Dispositif de mesure de position selon une des revendications précédentes, **caractérisé en ce que** la monture (4) est un guidage linéaire.

16. Dispositif de mesure de position selon une des revendications précédentes, **caractérisé en ce que** l'unité d'exploration (7) est guidée le long de l'appui (3).

17. Dispositif de mesure de position selon la revendication 16, **caractérisé en ce que** dans l'appui (3) est creusée selon la direction de mesure (X) une rainure (14) dans laquelle est en prise un élément de guidage (12) de l'unité d'exploration (7).
